(19) Europäisches Patentamt / European Patent Office / Office européen des brevets

(11) **EP 4 488 104 A1**

(12) **EUROPEAN PATENT APPLICATION**

(43) Date of publication:
**08.01.2025 Bulletin 2025/02**

(21) Application number: **24184294.7**

(22) Date of filing: **25.06.2024**

(51) International Patent Classification (IPC):
**B60L 50/51** (2019.01)   **B60L 53/24** (2019.01)
**H02M 1/14** (2006.01)

(52) Cooperative Patent Classification (CPC):
**B60L 53/24; B60L 50/51; H02M 1/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **04.07.2023   JP 2023109988**

(71) Applicants:
• **AISIN CORPORATION**
  **Kariya, Aichi 448-8650 (JP)**
• **NAGOYA INSTITUTE OF TECHNOLOGY**
  **Gokiso-cho, Showa-ku**
  **Nagoya-shi, Aichi-ken 466-8555 (JP)**

(72) Inventors:
• **SAHA, Subrata**
  **Kariya 448-8650 (JP)**
• **NAKAMURA, Keisuke**
  **Kariya 448-8650 (JP)**
• **TAGUCHI, Shin**
  **Kariya 448-8650 (JP)**
• **KOSAKA, Takashi**
  **Nagoya-shi, 466-8555 (JP)**
• **MATSUMORI, Hiroaki**
  **Nagoya-shi, 466-8555 (JP)**

(74) Representative: **Kramer Barske Schmidtchen
Patentanwälte PartG mbB
European Patent Attorneys
Landsberger Strasse 300
80687 München (DE)**

(54)    **IN-VEHICLE CHARGING DEVICE**

(57)    An in-vehicle charging device (10) charges, with power supplied from an external AC power supply (4), a DC power supply (3) of a vehicle driving device (9) including: a rotating electrical machine (70) including coils (7) of multiple phases connected to each other at a neutral point (7N), and serving as a driving power source of a wheel; an inverter (5) that converts power between a direct current and an alternating current of multiple phases; and the DC power supply (3) connected to the inverter (5), the in-vehicle charging device (10) including: an AC-DC converter (1) that converts power between AC power on an external AC power supply (4) side and first DC power; an active decoupling circuit (2) that includes the inverter (5), the coils (7) of multiple phases, and an output capacitor (Cs), and generates second DC power for charging the DC power supply (3) from the first DC power, in which a DC side terminal (T1d) of the AC-DC converter (1) and a DC side terminal (T5d) of the inverter (5) are connected without another passive component, and the output capacitor (Cs) is connected between the neutral point (7N) of the coils (7) and a DC negative electrode.

FIG.2

EP 4 488 104 A1

**Description**

TECHNICAL FIELD

The present disclosure relates to an in-vehicle charging device.

BACKGROUND DISCUSSION

JP 2022-503713 A discloses an in-vehicle charging device (onboard charger) that charges a direct-current (DC) power supply mounted on a vehicle provided with a rotating electrical machine as a driving power source of wheels of an electric vehicle, a hybrid vehicle, or the like in a state where the DC power supply is mounted on the vehicle (the reference signs in parentheses in the BACKGROUND DISCUSSION are those of the referenced document). Fig. 3 of this document illustrates an in-vehicle charging device in which an external alternating-current (AC) power supply (310) of a single phase is connected to a neutral point of coils of three phases connected in a Y-shape, arms on an AC side of an inverter (220) are connected to the respective coils of three phases, an input side terminal of a DC-DC converter (DC/DC converter) is connected to a DC side terminal of the inverter (220), and a DC power supply is connected to an output side terminal of the DC-DC converter. The coils of three phases and the inverter (220) form an AC-DC converter (AC/DC converter) that converts a sinusoidal grid current from the external AC power supply (310) into a direct current. By switching control of the inverter (220), the AC-DC converter also functions as a power factor correction (PFC) circuit that improves the power factor of the DC power converted from the AC power. The current after the AC-DC conversion has a ripple with a frequency twice the frequency (system frequency) of the external AC power supply (310). The DC-DC converter reduces the ripple and generates a battery current for charging the DC power supply. A smoothing capacitor is also provided between the AC-DC converter and the DC-DC converter.

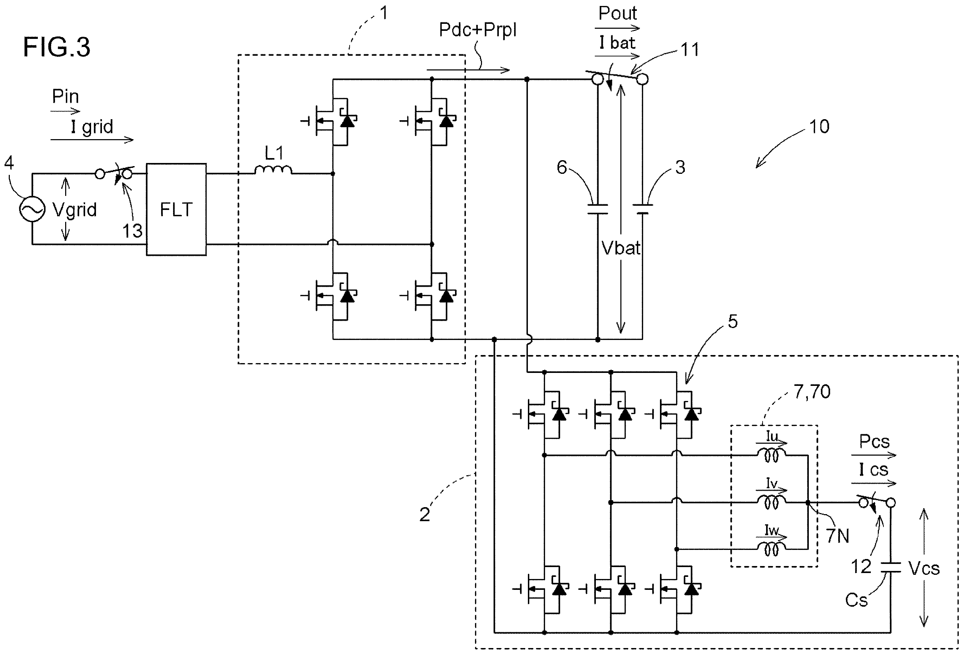

Here, for example, in an in-vehicle charging device in an electric vehicle or a hybrid vehicle, coils (stator coils) provided in a stator of a rotating electrical machine of a driving power source in the vehicle can be used as coils of three phases. However, such a rotating electrical machine is designed to have a high power density, and has a small inductance. As illustrated in Fig. 3 of the above document, when a single-phase external AC power supply is connected to a neutral point to form an AC-DC converter, a peak value of a harmonic current of a system current of the external AC power supply tends to increase at the time of AC-DC conversion.

As one method for suppressing this, it is conceivable to increase the control frequency of the inverter constituting the AC-DC converter. Alternatively, in order to reduce the ripple on the DC-DC converter side, it is conceivable to increase the control frequency of the DC-DC converter. However, when the control frequency is increased, it is necessary to shorten a control cycle (operation frequency) of a control device that controls the inverter or the DC-DC converter. Switching at a high frequency according to an early control cycle increases loss in switching elements included in the inverter and the DC-DC converter, leading to a decrease in efficiency of the in-vehicle charging device. In addition, it is necessary to use a microcomputer or the like capable of high-speed operation as the control device, which leads to an increase in cost of the in-vehicle charging device. Alternatively, it is also conceivable to add an inductor between the external AC power supply and the neutral point of coils of multiple phases. However, also in this case, the cost of the in-vehicle charging device increases due to the addition of the inductor. In addition, a smoothing capacitor provided between the AC-DC converter and the DC-DC converter is also required to have a large capacity, which tends to lead to an increase in size and cost of the in-vehicle charging device due to an increase in size.

A need thus exists for an in-vehicle charging device that charges a DC power supply of a vehicle driving device including a rotating electrical machine, an inverter, and the DC power supply with power from an external AC power supply using coils of the rotating electrical machine and the inverter, while suppressing an increase in system cost of the in-vehicle charging device.

SUMMARY

An in-vehicle charging device in view of the above is an on-vehicle charging device that charges a DC power supply of a vehicle driving device with power supplied from an external AC power supply, the vehicle driving device including: a rotating electrical machine including coils of multiple phases connected to each other at a neutral point, the rotating electrical machine serving as a driving power source of a wheel; an inverter that converts power between a direct current and an alternating current of multiple phases; and the DC power supply connected to the inverter, the in-vehicle charging device including: an AC-DC converter that converts power between AC power on an external AC power supply side and first DC power; and an active decoupling circuit that includes the inverter, the coils of multiple phases, and an output capacitor, and generates second DC power for charging the DC power supply from the first DC power, in which a DC side terminal of the AC-DC converter and a DC side terminal of the inverter are connected to each other without another passive component, and the output capacitor is connected between the neutral point of the coils and a DC negative electrode.

With this configuration, the AC-DC converter requiring an appropriate inductance is configured without using a drive system circuit of the rotating electrical machine (the coils of the rotating electrical machine and the inverter that drives the rotating electrical machine). When the coils of the rotating electrical machine are used in an in-vehicle charging device, it may be difficult to ensure necessary performance due to a small inductance of the coils. However, with this configuration, it is possible to configure an AC-DC converter capable of performing AC-DC conversion while securing sufficient performance such as a power factor improvement function by the AC-DC converter capable of setting an appropriate inductance without using the coils of the rotating electrical machine. Furthermore, since an appropriate inductance can be set in the AC-DC converter, it is not necessary to control the AC-DC converter at a short control cycle (high control frequency), and the loss of switching elements constituting the AC-DC converter is easily reduced. Therefore, the system efficiency of the in-vehicle charging device is easily increased. In addition, since a pulsation component is superimposed on a direct current converted from an alternating current by the AC-DC converter, a DC-DC converter is generally disposed via a decoupling capacitor for smoothing the pulsation component at a subsequent stage of the AC-DC converter in many cases. With this configuration, since the pulsation component can be reduced by the active decoupling circuit connected to the AC-DC converter without using such a decoupling capacitor, the circuit scale can be easily reduced. In addition, the inverter for driving the rotating electrical machine and the coils of the rotating electrical machine can also be used as the switching elements and the inductor constituting the active decoupling circuit, and the circuit scale of the entire in-vehicle system can be easily reduced. That is, with this configuration, it is possible to configure an in-vehicle charging device that charges a DC power supply of a vehicle driving device including a rotating electrical machine, an inverter, and the DC power supply with power from an external AC power supply using coils of the rotating electrical machine and the inverter, while suppressing an increase in system cost of the in-vehicle charging device.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic circuit block diagram of a drive control system for a rotating electrical machine;
Fig. 2 is a circuit block diagram illustrating an example of an in-vehicle charging device using the drive control system of the rotating electrical machine;
Fig. 3 is a functional block diagram obtained by modifying the circuit block diagram illustrated in Fig. 2;
Fig. 4 is a diagram illustrating a flow of a current in an active decoupling circuit (during charging of an output capacitor (a capacitor current is positive and increases);
Fig. 5 is a diagram illustrating a flow of a current in the active decoupling circuit (during charging of the output capacitor (the capacitor current is positive and decreases);
Fig. 6 is a diagram illustrating a flow of a current in the active decoupling circuit (during discharging of the output capacitor (the capacitor current is negative and the absolute value of the capacitor current increases));
Fig. 7 is a diagram illustrating a flow of a current in the active decoupling circuit (during discharging of the output capacitor (the capacitor current is negative and the absolute value of the capacitor current decreases);
Fig. 8 is a waveform diagram illustrating a relationship among a grid voltage, a grid current, a capacitor current, and a capacitor voltage;
Fig. 9 is a waveform diagram illustrating pulse-width modulation in controlling a capacitor current;
Fig. 10 is a circuit block diagram illustrating a first comparative example of an in-vehicle charging device using the drive control system of the rotating electrical machine; and
Fig. 11 is a circuit block diagram illustrating a second comparative example of an in-vehicle charging device using the drive control system of the rotating electrical machine.

DETAILED DESCRIPTION

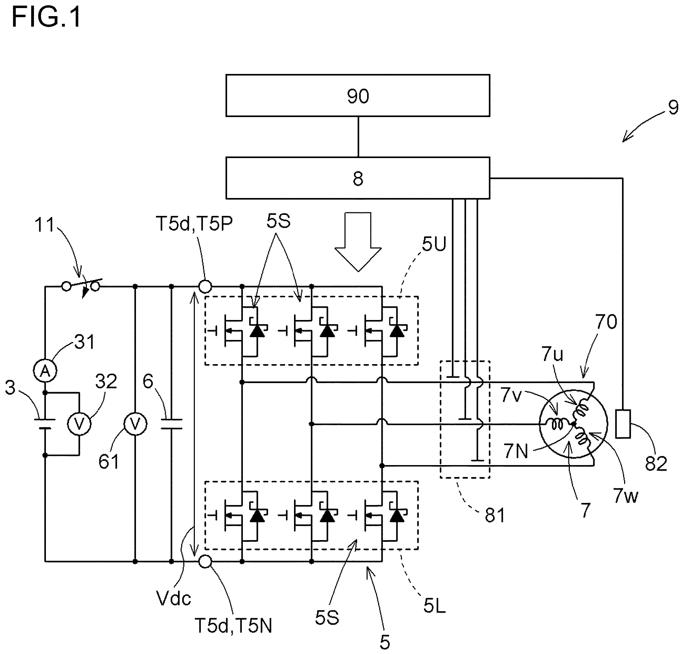

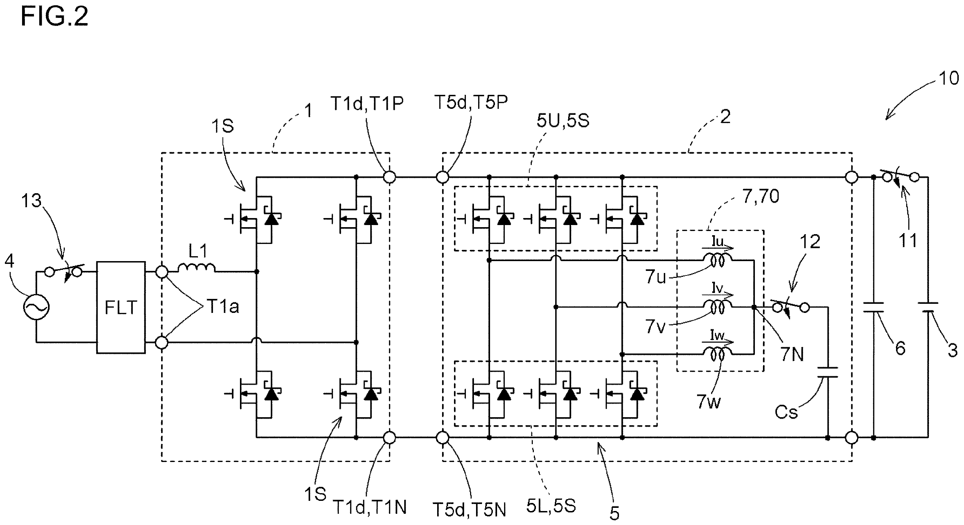

Hereinafter, an embodiment of an in-vehicle charging device will be described with reference to the drawings. The circuit block diagram of Fig. 1 schematically illustrates a drive control system of a rotating electrical machine 70, and the circuit block diagram of Fig. 2 illustrates an example of an in-vehicle charging device 10 using the drive control system of the rotating electrical machine 70. The in-vehicle charging device 10 is a device that charges a DC power supply 3 included in a vehicle driving device 9 as illustrated in Fig. 1 in a state where the DC power supply 3 is mounted on a vehicle. As illustrated in Fig. 1, the vehicle driving device 9 of the present embodiment includes the rotating electrical machine 70 serving as a driving power source of wheels of a hybrid vehicle, an electric vehicle, or the like, an inverter 5 that converts power between a direct current and an alternating current of multiple phases (here, three phases), and the DC power supply 3 connected to the inverter 5. Note that the vehicle driving device 9 is not prevented from including other driving power sources such as an internal combustion engine (not illustrated) in addition to the rotating electrical machine 70.

As illustrated in Fig. 2, the in-vehicle charging device 10 is a device that charges the DC power supply 3 of the vehicle driving device 9 with power supplied from an external AC power supply 4 (grid power supply, here single phase), and is a device called an onboard charger. In the present embodiment, the in-vehicle charging device 10 is configured to share a part with the vehicle driving device 9. Specifically, the inverter 5 and the coils 7 of the rotating electrical machine 70 are shared.

As illustrated in Fig. 1, the vehicle driving device 9 includes a control device 8 that controls the rotating electrical machine 70 serving as a driving power source of a vehicle, and the control device 8 performs current feedback control to control driving of the rotating electrical machine 70. The rotating electrical machine 70 to be driven is an interior permanent magnet synchronous motor (IPMSM) including a stator in which the coils 7 (stator coils) of multiple phases (N phases where N is any natural number; a three-phase form where N=3 is exemplified in the present embodiment) are disposed, and a rotor in which a permanent magnet is disposed in a rotor core. Such a configuration is known, and illustration of the stator core, the stator, the rotor core, the rotor, the permanent magnet, and the like is omitted in the present embodiment. In the present embodiment, a Y-type (star type) form in which the coils 7 of three phases are short-circuited at a neutral point 7N is illustrated. However, the rotating electrical machine 70 may include, for example, two sets of coils 7 of three phases, and may be driven by an alternating current of six phases. Note that the rotating electrical machine 70 can function as both an electric motor and a generator. When the rotating electrical machine 70 functions as an electric motor, the rotating electrical machine 70 is in a powering state, and when the rotating electrical machine 70 functions as a generator, the rotating electrical machine 70 is in a regeneration state.

As illustrated in Fig. 1, the vehicle driving device 9 includes the inverter 5. The inverter 5 is connected to the AC rotating electrical machine 70 and the DC power supply 3 to convert power between a direct current and an alternating current of multiple phases. A pair of DC side terminals (DC side terminals T5d) of the inverter 5 is connected to positive and negative electrode terminals of the DC power supply 3. Specifically, a positive electrode side terminal (inverter positive electrode terminal T5P) of the pair of DC side terminals T5d is connected to a positive electrode of the DC power supply 3, and a negative electrode side terminal (inverter negative electrode terminal T5N) of the pair of DC side terminals T5d is connected to a negative electrode of the DC power supply 3. AC side terminals of multiple phases of the inverter 5 are connected to the respective coils 7 of multiple phases. In the present embodiment, the inverter 5 includes a U-phase arm, a V-phase arm, and a W-phase arm as arms of multiple phases. Each of the arms is formed by connecting an upper-stage side switching element 5U disposed on the positive electrode side and the lower-stage side switching element 5L disposed on the negative electrode side in series. A midpoint of each arm, that is, a connection point between the upper-stage side switching element 5U and the lower-stage side switching element 5L is connected to the corresponding coil 7. Specifically, the midpoint of the U-phase arm and a U-phase coil 7u are connected, the midpoint of the V-phase arm and a V-phase coil 7v are connected, and the midpoint of the W-phase arm and a W-phase coil 7w are connected.

A smoothing capacitor (DC link capacitor 6) that smooths a voltage (DC link voltage Vdc) between the positive electrode and the negative electrode is provided on the DC side of the inverter 5. A voltage sensor (DC link voltage sensor 61) that detects the DC link voltage Vdc is also provided on the DC side of the inverter 5.

The DC power supply 3 includes, for example, a rechargeable secondary battery (battery) such as a lithium ion battery, an electric double layer capacitor, and the like. As in the present embodiment, when the rotating electrical machine 70 is a driving power source for a vehicle, the DC power supply 3 is a high-voltage, high-capacity DC power supply, and the rated power supply voltage is, for example, 200 to 400 [V]. In many cases, the DC power supply 3 is configured to be able to connect and disconnect electrical connection to and from the inverter 5 and the rotating electrical machine 70 by operation of a main switch (ignition switch) or the like of the vehicle. For example, the DC power supply 3 is connected to the inverter 5 and the rotating electrical machine 70 via a main contactor 11 (first contactor) including a relay or the like. The DC power supply 3 also includes a current sensor (battery current sensor 31) that detects an input/output current (battery current Ibat: see Fig. 3) to/from the DC power supply 3, and a voltage sensor (battery voltage sensor 32) that detects a terminal voltage (battery voltage Vbat: see Fig. 3) of the DC power supply 3.

Although not illustrated, for example, when the DC power supply 3 is a lithium ion battery or the like, a battery management system (BMS) is often provided. A secondary battery such as a lithium ion battery includes a plurality of cells (battery cells). The battery management system is a battery management control system that performs (1) prevention of overcharge and overdischarge of a cell, (2) prevention of overcurrent from flowing through a cell, (3) temperature management of a cell, (4) calculation of a state of charge (SOC), (5) equalization of a cell voltage, and the like. The battery current sensor 31 and the battery voltage sensor 32 described above may be configured as a part of the battery management system.

As illustrated in Fig. 1, the inverter 5 includes a plurality of switching elements 5S. As the switching element 5S, it is preferable to apply a power semiconductor element capable of operating at a high frequency, such as an insulated gate bipolar transistor (IGBT), a power metal oxide semiconductor field effect transistor (MOSFET), a silicon carbide - metal oxide semiconductor field effect transistor (SiC-MOSFET), a silicon carbide - static induction transistor (SiC-SIT), or a gallium nitride semiconductor field effect transistor (GaN-MOSFET). The present embodiment exemplifies a mode in which an FET is used as the switching element 5S. In the present embodiment, a freewheel diode is connected in parallel to each switching element 5S with a direction from the negative electrode to the positive electrode (direction from the lower-stage side to the upper-stage side) as a forward direction. As a matter of course, when a body diode is used or when reverse conduction in a wide bandgap semiconductor transistor made of enhanced mode gallium nitride (E-GaN) is used, the freewheel diode of such a form may not be provided.

As illustrated in Fig. 1, the inverter 5 is controlled by the control device 8. The control device 8 is constructed using a logic circuit such as a microcomputer as a core member. For example, the control device 8 drives the rotating electrical machine 70 via the inverter 5 by performing current feedback control using a vector control method on the basis of a target torque (torque command) of the rotating electrical machine 70 provided as a request signal from another control device such as the vehicle control device 90, which is one of host control devices. In the vector control method, currents (in the present embodiment, a U-phase current Iu, a V-phase current Iv, and a W-phase current Iw: see Fig. 2 and the like) flowing through the coils 7 of respective phases are coordinate-transformed into vector components of a d-axis, which is a direction of a magnetic field generated by the permanent magnet disposed in the rotor, and a q-axis in a direction orthogonal to the d-axis (a direction advanced by $\pi/2$ in an electrical angle with respect to the direction of the magnetic field) to perform feedback control. The coordinate system of the coordinate transformation destination is referred to as a dq-axis orthogonal coordinate system. An operating voltage of a logic circuit element such as a microcomputer is about 3.3 to 5 volts. In the present embodiment, a control signal generated by the logic circuit element is transmitted to the inverter 5 via a drive circuit, which is not illustrated for simplicity. Alternatively, it may be considered that the control device 8 includes a drive circuit.

Actual currents flowing through the coils 7 of respective phases of the rotating electrical machine 70 are detected by a current sensor (motor current sensor 81), and the control device 8 acquires the detection result. The magnetic pole position (electrical angle) and the rotational speed (angular velocity) of the rotor of the rotating electrical machine 70 at each time point are detected by a rotation sensor 82 such as, for example, a resolver or an inductive position sensor, and the control device 8 acquires the detection result. The control device 8 executes current feedback control using the detection results of the motor current sensor 81 and the rotation sensor 82. The control device 8 includes various functional units for current feedback control, and each functional unit is realized by cooperation of hardware such as a microcomputer and software (program).

As described above, the rotating electrical machine 70 connected to the DC power supply 3 via the inverter 5 functions as an electric motor by the power supplied from the DC power supply 3, and can also function as a generator to charge the DC power supply 3. For example, in a hybrid vehicle, mechanical energy can be supplied to the rotating electrical machine 70 by power of an internal combustion engine or the like to cause the rotating electrical machine 70 to generate power, but there are few opportunities for power generation, and the DC power supply 3 cannot be sufficiently charged in some cases. In addition, in an electric vehicle in which only the rotating electrical machine 70 is mounted as a driving power source, power generation is limited to that by mechanical energy from wheels in inertial traveling or the like, and the DC power supply 3 cannot be sufficiently charged in many cases. In the hybrid vehicle, sometimes the energy efficiency is better when the electric power is supplied from the outside than when the electric power is generated by the rotating electrical machine 70. For this reason, it is preferable that the DC power supply 3 can be charged by an external power supply in a state where the DC power supply 3 is mounted on the vehicle.

The in-vehicle charging device 10 of the present embodiment charges the DC power supply 3 of the vehicle driving device 9 with power supplied from the external AC power supply 4. As illustrated in Fig. 2, the in-vehicle charging device 10 includes an AC-DC converter 1 (AC/DC converter) that is connected to the external AC power supply 4 and converts AC power from the external AC power supply 4 into first DC power, and an active decoupling circuit 2 that generates second DC power for charging the DC power supply 3 from the first DC power. Although details will be described later, in the present embodiment, the active decoupling circuit 2 includes the inverter 5, the coils 7 of multiple phases, and an output capacitor Cs. The active decoupling circuit 2 also has a function as a so-called DC-DC converter (DC/DC converter).

In the in-vehicle charging device 10 of the present embodiment, DC side terminals T1d of the AC-DC converter 1 and the DC side terminals T5d of the inverter 5 are connected without another passive component (for example, the DC link capacitor 6). Specifically, the DC side positive electrode terminal T1P of the AC-DC converter 1 and the inverter positive electrode terminal T5P of the inverter 5 are connected, and the DC side negative electrode terminal T1N of the AC-DC converter 1 and the inverter negative electrode terminal T5N of the inverter 5 are connected. The output capacitor Cs is connected between the neutral point 7N of the coils 7 and the DC negative electrode. In the present embodiment, AC power is supplied from the external AC power supply 4 to the in-vehicle charging device 10 via an electromagnetic interference (EMI) filter FLT that reduces EMI noise.

The AC-DC converter 1 and the active decoupling circuit 2 include switching elements (switching elements denoted by reference numerals 1S and 5S in Fig. 2), and these switching elements are controlled by the control device 8 that controls driving of the rotating electrical machine 70 via the inverter 5. As described later, the in-vehicle charging device 10 includes contactors (main contactor 11, OBC contactor 12 (second contactor), grid contactor 13 (third contactor)). These contactors are also controlled by the control device 8, or the control device 8 and the vehicle control device 90. As described above with reference to Fig. 1, the control device 8 is included in the drive control system of the rotating electrical machine, and the control device 8 is also used for the drive control of the rotating electrical machine 70 and the charge control of the DC power supply 3.

When the DC power supply 3 is charged, power is supplied from the external AC power supply 4 to the DC power supply 3. Therefore, due to the circuit configuration, the AC-DC converter 1 disposed relatively on the external AC power supply 4 side (upstream side) may be referred to as a front end circuit or a first circuit, and the active decoupling circuit 2 disposed relatively on the DC power supply 3 side (downstream side) may be referred to as a back end circuit or a second circuit. In the present embodiment, the AC-DC converter 1, which is a front end circuit connected to the external AC power supply 4, is configured by a circuit formed separately from the vehicle driving device 9, and the active decoupling circuit 2, which is a back end circuit disposed closer to the DC power supply 3 than the AC-DC converter 1, is configured by sharing a drive system circuit (the coils 7 and the inverter 5) of the rotating electrical machine 70.

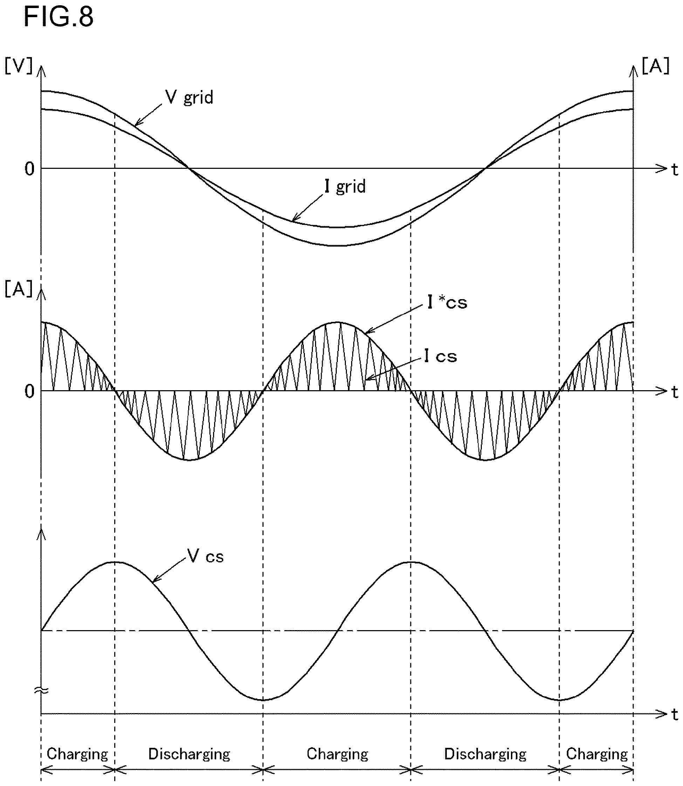

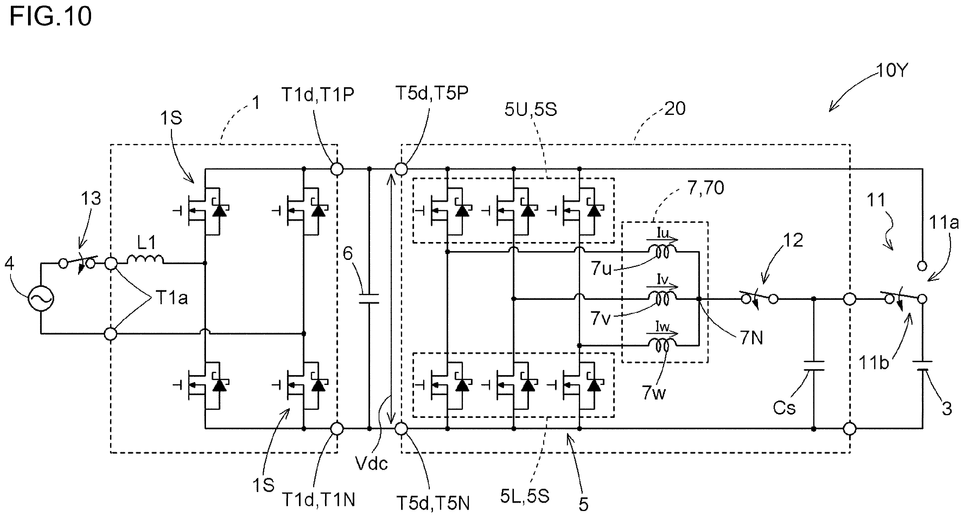

As described above, in the in-vehicle charging device 10 of the present embodiment, the DC side terminals T1d of the AC-DC converter 1 and the DC side terminals T5d of the inverter 5 are connected without another passive component (for example, the DC link capacitor 6). That is, the first circuit and the second circuit are connected without a passive component such as a smoothing capacitor. For example, in a mode in which the first circuit and the second circuit are connected via a smoothing capacitor (such as a first comparative example charging device 10Y illustrated in Fig. 10), the first circuit (in this case, the AC-DC converter 1) and the second circuit (in this case, the DC-DC converter 20) can be operated independently of each other, and the switching elements 1S of the first circuit and the switching elements 5S of the second circuit do not need to be switched in cooperation and are controlled independently of each other. On the other hand, in the present embodiment, the first circuit (AC-DC converter 1) and the second circuit (active decoupling circuit 2) operate in cooperation. Therefore, in particular, the switching elements 5S of the second circuit, which is a subsequent circuit, is controlled to operate in conjunction with the first circuit. Details will be described later with reference to Fig. 8 and the like.

As illustrated in Fig. 2, the AC-DC converter 1 includes an inductor L1. In AC-DC conversion, a phase difference occurs between a voltage phase and a current phase due to an inductive impedance or a capacitive impedance, and a power factor decreases due to the phase difference. The AC-DC converter 1 includes the switching elements 1S, and by controlling the switching elements 1S, for example, a current phase is adjusted, a phase difference is compensated, and a power factor can be improved. That is, the AC-DC converter 1 is also configured to function as a power factor correction (PFC) circuit that improves the power factor of the DC power converted from the AC power supplied from the external AC power supply 4.

In the present embodiment, the AC-DC converter 1 includes the inductor L1 and a full-bridge circuit using the switching elements 1S. By providing the full-bridge circuit, the AC-DC converter 1 can function as a bidirectional converter capable of AC-DC conversion and DC-AC conversion. For example, the in-vehicle charging device 10 can be used as a device having two functions of a function of charging the DC power supply 3 with power supplied from the external AC power supply 4 and a function of supplying AC power to a device outside the vehicle with power stored in the DC power supply 3.

In recent years, it has been proposed to use the DC power supply 3 of an electric vehicle or a hybrid vehicle as an emergency power supply at the time of disaster or the like. Since the AC-DC converter 1 includes the full-bridge circuit, the DC power supply 3 can be used as such an emergency power supply. Naturally, when the use of the DC power supply 3 is not considered, the AC-DC converter 1 may be configured as a one-way converter that performs only AC-DC conversion. In this case, the AC-DC converter 1 may include, for example, a half-bridge circuit.

As illustrated in Fig. 2, the in-vehicle charging device 10 includes the grid contactor 13 that selectively connects the AC side terminals T1a of the AC-DC converter 1 and the external AC power supply 4 (connects and disconnects the AC side terminals T1a and the external AC power supply 4). The grid contactor 13 also includes, for example, a relay. When the grid contactor 13 is closed, the grid contactor 13 is brought into a conductive state, and the external AC power supply 4 and the in-vehicle charging device 10 (AC-DC converter 1) are electrically connected.

As illustrated in Fig. 2, the in-vehicle charging device 10 includes the OBC contactor 12 that disconnects electrical connection between the neutral point 7N of the coils 7 and the output capacitor Cs. The OBC contactor 12 also includes, for example, a relay. When the OBC contactor 12 is closed, the OBC contactor 12 is conducted, and the neutral point 7N and the DC negative electrode are connected via the output capacitor Cs. As described above, the drive control system of the rotating electrical machine 70 and the in-vehicle charging device 10 share the main contactor 11. When the inverter 5 functions as the in-vehicle charging device 10, control is performed such that the main contactor 11 is closed and the OBC contactor 12 is closed. That is, in a state where the main contactor 11 and the OBC contactor 12 are both closed, power is converted between the external AC power supply 4 and the DC power supply 3 via the active decoupling circuit 2 including the AC-DC converter 1 and the inverter 5.

When the inverter 5 is used for drive control of the rotating electrical machine 70, the main contactor 11 is closed, and the OBC contactor 12 and the grid contactor 13 are controlled to be in an open state. That is, in a state where the main contactor 11 is closed and the OBC contactor 12 is opened, power is converted between the DC power supply 3 and the rotating electrical machine 70 via the inverter 5.

As described above, it is possible to realize a circuit capable of switching between the function of controlling driving of the rotating electrical machine 70 and the function of charging the DC power supply 3 with the external AC power supply 4 simply by changing the connection form to the coils 7 by the OBC contactor 12. That is, the in-vehicle charging device 10 can be configured with a simple configuration.

As described above, the in-vehicle charging device 10 includes the AC-DC converter 1 and the active decoupling circuit 2. The circuit block diagram of Fig. 3 illustrates the circuit block diagram of Fig. 2 separately for each function for easy understanding. The AC-DC converter 1 adjusts the power factor of a grid current Igrid supplied from the external AC power supply 4 to a value close to "1" while performing boosting. However, a pulsation component caused by the AC frequency of the external AC power supply 4 is superimposed on the first DC power output from the AC-DC converter 1. Specifically, pulsation of the second harmonic component of the AC frequency of the external AC power supply 4 is superimposed. The active decoupling circuit 2 reduces the pulsation of the second harmonic component, and supplies the second DC power in which the pulsation is suppressed, preferably the second DC power from which the pulsation is removed, to the DC power supply 3 to charge the DC power supply 3.

Here, assuming that the AC voltage supplied from the external AC power supply 4 is "grid voltage Vgrid", the alternating current is "grid current Igrid", and the respective amplitudes (positive value from amplitude center to wave height, the same applies to "_ peak" below) are "Vgrid_peak" and "Igrid_peak", the grid voltage Vgrid and the grid current Igrid are expressed by the following Formulas (1) and (2).

$$[\text{Math 1}] \quad V_{grid} = V_{grid\_peak} \cos \omega t \quad \cdots (1)$$

$$[\text{Math 2}] \quad I_{grid} = I_{grid\_peak} \cos \omega t \quad \cdots (2)$$

Assuming that an input power Pin input from the external AC power supply 4 to the AC-DC converter 1 is converted into the first DC power at the power factor "1", the relationship between the input power Pin and the first DC power is expressed by the following Formulas (3) to (5). Formula (3) indicates that the first DC power includes a DC component Pdc and an AC component Prpl. Formula (4) indicates the DC component Pdc of the first DC power, and Formula (5) represents the AC component Prpl that is a pulsation component of the first DC power.

$$[\text{Math 3}] \quad P_{in} = V_{grid} I_{grid} \approx P_{dc} + P_{rpl} \quad \cdots (3)$$

$$[\text{Math 4}] \quad P_{dc} = \frac{V_{grid\_peak} \cdot I_{grid\_peak}}{2} \quad \cdots (4)$$

$$[\text{Math 5}] \quad P_{rpl} = \frac{V_{grid\_peak} \cdot I_{grid\_peak}}{2} \cos 2\omega t \quad \cdots (5)$$

The active decoupling circuit 2 functions such that the active decoupling circuit 2 causes a current corresponding to the AC component Prpl expressed by Formula (5) to flow into the active decoupling circuit 2 so that an output power Pout to the DC power supply 3 is only the DC component Pdc expressed by Formula (4) (Formula (6)). Therefore, the active decoupling circuit 2 operates so that capacitor power Pcs, which is the power in the output capacitor Cs, matches the AC component Prpl of the first DC power, as shown in the following Formula (7).

$$[\text{Math 6}] \quad P_{out} = P_{dc} \quad \cdots (6)$$

$$[\text{Math 7}] \quad P_{rpl} = P_{cs} \quad \cdots (7)$$

Since the capacitor power Pcs satisfies the relationship of the following Formula (8) between a capacitor voltage Vcs and a capacitor current Ics, the capacitor power Pcs can be controlled by appropriately controlling the capacitor current Ics.

$$P_{cs} = V_{cs}I_{cs} \cdots (8)$$

[Math 8]

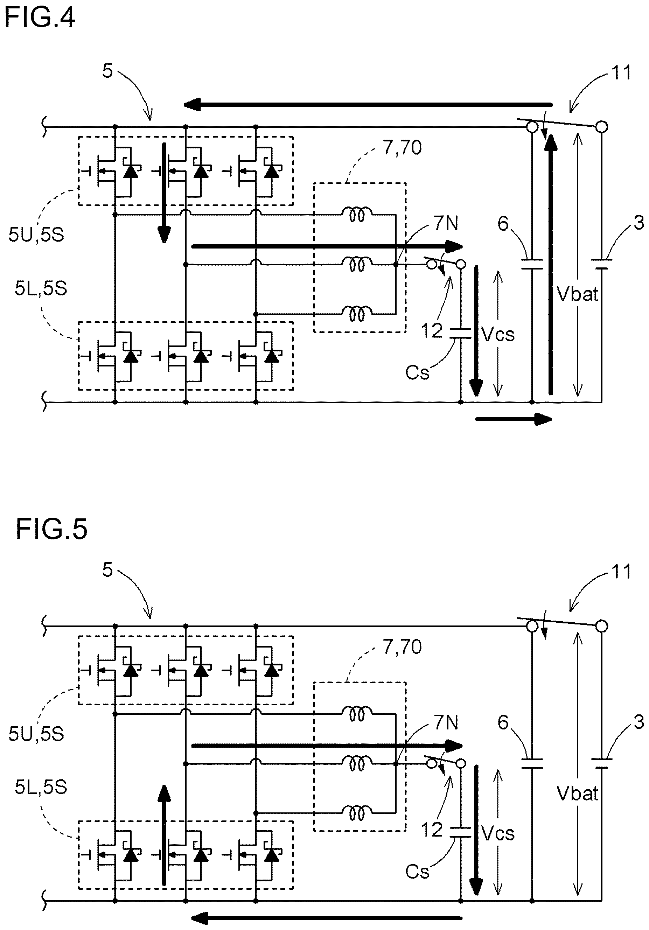

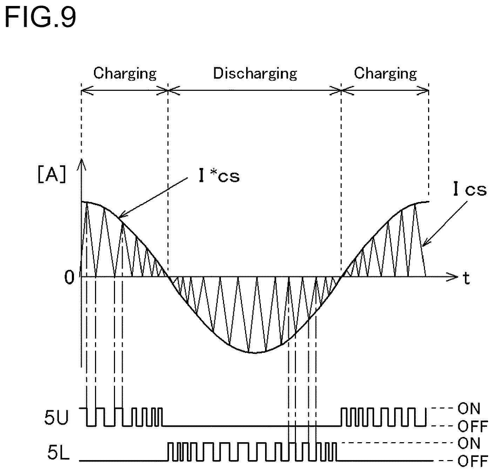

Figs. 4 to 7 illustrate the flow of a current in the active decoupling circuit 2. In addition, the waveform diagram of Fig. 8 illustrates the relationship among the grid voltage Vgrid, the grid current Igrid, the capacitor current Ics, and the capacitor voltage Vcs. As described above, since the capacitor current Ics is controlled in the active decoupling circuit 2, a capacitor current command I*cs is also illustrated in Fig. 8. In addition, the waveform diagram of Fig. 9 illustrates the capacitor current command I*cs and the capacitor current Ics, which are switch-controlled by the pulse width modulation control, and switching pulses.

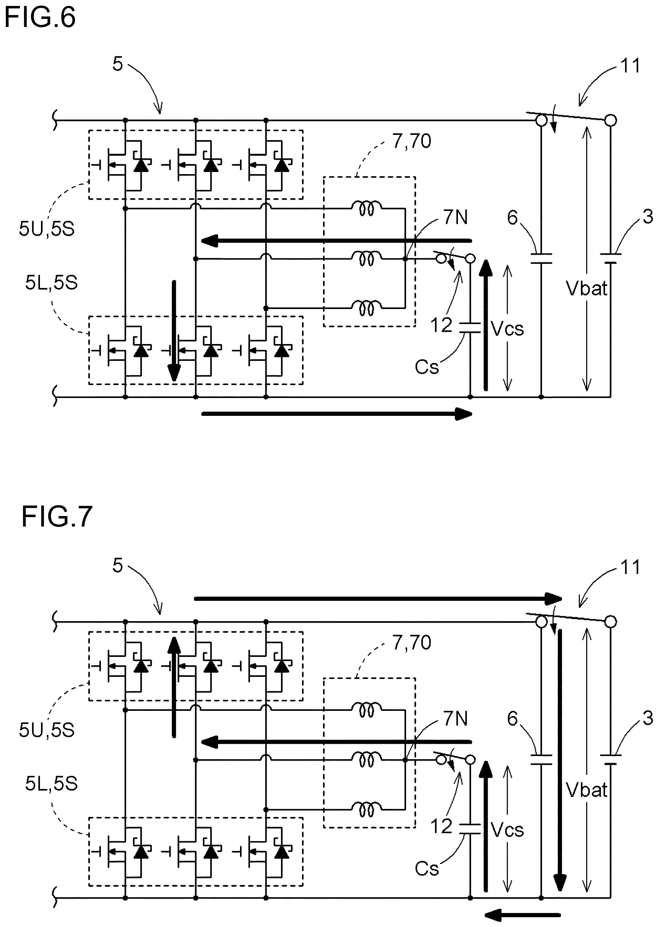

Figs. 4 and 5 illustrate the flow of the current when the capacitor current Ics flowing through the output capacitor Cs is a positive value with the direction of the arrow illustrated in Fig. 3 as positive, and the output capacitor Cs is charged, and correspond to the flow of the current in the period indicated as "Charging" in Figs. 8 and 9. Figs. 6 and 7 illustrate the flow of the current when the capacitor current Ics flowing through the output capacitor Cs is a negative value and the output capacitor Cs is discharged, and correspond to the flow of the current in the period indicated as "Discharging" in Figs. 8 and 9.

As described above, since the inductance of the coils 7 of the rotating electrical machine 70 is small, an inductor (coils 7) is used in the active decoupling circuit 2 not to store energy but to pass a current. Further, in in-vehicle charging device 10 of the present embodiment, decoupling action by the active decoupling circuit 2 is realized by using the capacitor current Ics as a discontinuous current by pulse width modulation instead of a so-called continuous current.

As described above, the inverter 5 includes a plurality of arms in which the upper-stage side switching element 5U and the lower-stage side switching element 5L are connected in series between the DC positive electrode and the DC negative electrode, the plurality of arms being arranged in parallel according to the number of phases of alternating currents of multiple phases. In the present embodiment, the inverter 5 includes three arms. When the inverter 5 functions as the active decoupling circuit 2, a plurality of the upper-stage side switching elements 5U are simultaneously subjected to switching control, and a plurality of the lower-stage side switching elements 5L are simultaneously subjected to switching control. That is, the inverter 5 including arms of multiple phases corresponding to alternating currents of multiple phases can be used as an inverter (switching circuit) including a single-phase arm. Since the currents flow through the plurality of arms in a distributed manner, the consumption of the inverter 5 can be easily suppressed even if the inverter 5 is used as a part of the in-vehicle charging device 10.

In addition, since currents of substantially the same magnitude except for individual differences and errors flow through the coils 7 of multiple phases, almost no torque is generated in the rotor even if the coils 7 are also used for the in-vehicle charging device 10. Since charging of the DC power supply 3 is performed in a state where the vehicle is stopped, it is not preferable that torque is generated in the rotor. For example, it is conceivable that power transmission from the rotor to wheels is interrupted by a clutch or the like, or rotation of an output member connected to the wheels or rotation of the rotor is restricted by a so-called parking brake or the like. However, in these cases, the mechanism of the vehicle driving device 9 becomes complicated, or a mechanical load is generated in a gear or the like of the vehicle driving device 9. In the present embodiment, since control is performed such that no torque is generated in the rotor, the in-vehicle charging device 10 can be appropriately configured with almost no mechanical load generated in the gear or the like of the vehicle driving device 9.

The waveform diagram of Fig. 9 illustrates modulated pulses of pulse width modulation of the upper-stage side switching elements 5U and the lower-stage side switching elements 5L when the capacitor current Ics is controlled. The sinusoidal waveform is the capacitor current command I*cs, and the control device 8 generates a modulated pulse based on the capacitor current command I*cs. Therefore, the actual capacitor current Ics has a triangular waveform. As is clear from Fig. 9, the inverter 5 is controlled by the modulated pulse to three states, that is, a first state in which all the upper-stage side switching elements 5U are turned on (ON) and all the lower-stage side switching elements 5L are turned off (OFF), a second state in which all the upper-stage side switching elements 5U are turned off and all the lower-stage side switching elements 5L are turned on, and a third state in which all the upper-stage side switching elements 5U and all the lower-stage side switching elements 5L are turned off. In the third state, all the switching elements 5S of the inverter 5 are in the off state.

Fig. 4 illustrates the flow of a current when the capacitor current Ics flowing through the output capacitor Cs is a positive value and increases with the direction of the arrow illustrated in Figs. 2 and 3 as positive, and the output capacitor Cs is charged. In the waveform diagrams illustrated in Figs. 8 and 9, in a period indicated as "Charging", a period in which the capacitor current Ics increases from the center of amplitude of the capacitor current command I*cs toward the wave height (peak) corresponds to Fig. 4. The switching elements 5S of the inverter 5 are controlled to be in the first state. The AC component Prpl of the first DC power is consumed to charge the output capacitor Cs, and substantially only the DC component Pdc of the first DC power is supplied to the DC power supply 3 as the second DC power.

Fig. 5 illustrates the flow of a current when the output capacitor Cs is charged while the capacitor current Ics is a positive value and decreases. In the waveform diagrams illustrated in Figs. 8 and 9, in a period indicated as "Charging", a period in which the capacitor current Ics decreases from the wave height (peak) of the capacitor current command I*cs toward the center of amplitude corresponds to Fig. 5. The switching elements 5S of the inverter are controlled to be in the third state. The capacitor current Ics passes through the freewheel diode connected in parallel to the lower-stage side switching elements 5L or passes through the lower-stage side switching elements 5L (when reverse conduction of a body diode or an E-GaN transistor is used), and decreases while flowing back to and from the output capacitor Cs.

That is, in the phase of "Charging", the lower-stage side switching elements 5L are controlled to be always off, and the upper-stage side switching elements 5U are subjected to switching control by pulse width modulation control.

Fig. 7 illustrates the flow of a current when the capacitor current Ics is a negative value and the output capacitor Cs is discharged while the absolute value of the capacitor current Ics decreases. In the waveform diagrams illustrated in Figs. 8 and 9, in a period indicated as "Discharging", a period in which the absolute value of the capacitor current Ics decreases from the wave height (bottom) of the capacitor current command I*cs toward the center of amplitude corresponds to Fig. 7. The switching elements 5S of the inverter are controlled to be in the third state. The current flowing by a charge discharged from the output capacitor Cs flows to the DC power supply 3 through the freewheel diode connected in parallel to the upper-stage side switching elements 5U or through the lower-stage side switching elements 5L (when reverse conduction of the body diode or the E-GaN transistor is used). That is, the AC component Prpl of the first DC power is reduced by the charge discharged from the output capacitor Cs, and substantially only the DC component Pdc of the first DC power is supplied to the DC power supply 3 as the second DC power.

Fig. 6 illustrates the flow of a current when the capacitor current Ics is a negative value, the absolute value of the capacitor current Ics increases, and the output capacitor Cs is discharged. In the waveform diagrams illustrated in Figs. 8 and 9, in a period indicated as "Discharging", a period in which the absolute value of the capacitor current Ics increases from the center of amplitude of the capacitor current command I*cs toward the wave height (bottom) corresponds to Fig. 6. The switching elements 5S of the inverter 5 are controlled to be in the second state. The absolute value of the capacitor current Ics increases while flowing back to the output capacitor Cs through the lower-stage side switching elements 5L.

That is, in the phase of "Discharging ", contrary to the phase of "Charging", the upper-stage side switching elements 5U are always controlled to be off, and the lower-stage side switching elements 5L are subjected to switching control by pulse width modulation control.

As illustrated in Fig. 8, the phase of the capacitor current command I*cs coincides with the phase of the grid voltage Vgrid and the phase of the grid current Igrid. Since the grid voltage Vgrid and the grid current Igrid are expressed by the above Formulas (1) and (2), and the AC component Prpl of the input power Pin is expressed by the above Formula (5), the capacitor current command I*cs is expressed by the following Formula (9) with the amplitude of the capacitor current command I*cs as I*cs_peak. The phase of the capacitor voltage Vcs is delayed by $\pi/2$ with respect to the capacitor current Ics. The capacitor voltage Vcs is expressed by the following Formula (10) with the amplitude of the capacitor voltage Vcs as Vcs_peak.

$$[\text{Math 9}] \quad I^{*}{}_{cs} = I^{*}{}_{cs\_peak}\, cos2\omega t \,\cdots (9)$$

$$[\text{Math 10}] \quad V_{cs} = V_{cs\_peak}\, \cos\left(2\omega t - \frac{\pi}{2}\right) \cdots (10)$$

As described above, in the inverter 5, the plurality of upper-stage side switching elements 5U and the plurality of lower-stage side switching elements 5L are subjected to switching control such that the phase of the current flowing through the output capacitor Cs coincides with the phase of the alternating current in the AC-DC converter 1. The active decoupling circuit 2 attenuates an AC harmonic component in the AC-DC converter 1 by causing the AC harmonic component to flow to the output capacitor Cs. By matching the phase of the current flowing through the output capacitor Cs with the phase of the alternating current in the AC-DC converter 1, the attenuation effect can be enhanced.

In addition, as described above, in the present embodiment, it is necessary to cause the current (capacitor current Ics) corresponding to the AC component Prpl that is the pulsation component of the first DC power to flow in the active decoupling circuit 2. That is, it is necessary to realize the above-described "Charging" current loop and "Discharging" current loop for the output capacitor Cs. Therefore, the capacitor current command I*cs is set in consideration of the magnitude relationship with the output voltage (= battery voltage Vbat) to the DC power supply 3.

In order to realize the current loop of "Charging" (Fig. 4) and the current loop of "Discharging" (Fig. 7), the capacitor voltage Vcs needs to be a voltage lower than the battery voltage Vbat. In addition, since pulsation corresponding to the AC component Prpl of the first DC power occurs in the capacitor voltage Vcs, the capacitor voltage Vcs is set to a voltage lower than the battery voltage Vbat in consideration of the amplitude of the pulsation. That is, the amplitude "V*cs_peak" of the capacitor voltage command V*cs, which is a command value of the capacitor voltage Vcs, is set so as to satisfy the following Formula (11) with the amplitude of the AC component "Vrpl" of the voltage at the first DC power as Vrpl_peak.

$$V^*_{cs\_peak} < V_{bat} - V_{rpl\_peak} \cdots (11)$$

[Math 11]

Since the battery voltage Vbat increases as the charging of the DC power supply 3 progresses, when the capacitor voltage command V*cs is constant, the difference between the capacitor voltage Vcs and the battery voltage Vbat increases, the capacitor current Ics increases, and the loss also increases. Therefore, it is preferable that the capacitor voltage Vcs increases as the battery voltage Vbat increases while satisfying Formula (11). That is, it is preferable that the capacitor voltage command V*cs be set so as to rise as the battery voltage Vbat rises while satisfying Formula (11).

Advantages of the in-vehicle charging device 10 will be described below with reference to comparative examples. In the comparative examples, the EMI filter FLT is omitted for the sake of simplicity. The circuit block diagram of Fig. 10 illustrates a first comparative example (first comparative example charging device 10Y) of the in-vehicle charging device 10 using the drive control system of the rotating electrical machine 70. Similarly to the in-vehicle charging device 10 of the present embodiment, the first comparative example charging device 10Y also charges the DC power supply 3 of the vehicle driving device 9 with power supplied from the external AC power supply 4. As illustrated in Fig. 10, the first comparative example charging device 10Y includes the AC-DC converter 1 ((AC/DC converter) that is connected to the external AC power supply 4 and converts AC power from the external AC power supply 4 into the first DC power, and the DC-DC converter 20 (DC/DC converter) that converts the first DC power converted by the AC-DC converter 1 into the second DC power.

Also in the first comparative example charging device 10Y, the AC-DC converter 1 disposed relatively on the external AC power supply 4 side (upstream side) can be referred to as a front end circuit or a first circuit, and the DC-DC converter 20 disposed relatively on the DC power supply 3 side (downstream side) can be referred to as a back end circuit or a second circuit. Also in the first comparative example charging device 10Y, the AC-DC converter 1, which is a front end circuit connected to the external AC power supply 4, is configured by a circuit formed separately from the vehicle driving device 9, and the DC-DC converter 20, which is a back end circuit disposed closer to the DC power supply 3 than the AC-DC converter 1, is configured by sharing the drive system circuit (the coils 7 and the inverter 5) of the rotating electrical machine 70.

Hereinafter, a configuration of the first comparative example charging device 10Y will be described. The configuration of the AC-DC converter 1 is similar to that of the AC-DC converter 1 of the in-vehicle charging device 10 described above, and thus a detailed description thereof will be omitted.

Similarly to the active decoupling circuit 2 of the in-vehicle charging device 10 described above, the DC-DC converter 20 also includes the inverter 5, the coils 7 of multiple phases, the output capacitor Cs, and the OBC contactor 12. However, in the active decoupling circuit 2, the DC side terminals T1d of the AC-DC converter 1 and the DC side terminals T5d of the inverter 5 are connected without interposing other passive components (for example, the DC link capacitor 6), whereas in the DC-DC converter 20 of the first comparative example charging device 10Y, the DC side terminals T1d of the AC-DC converter 1 and the DC side terminals T5d of the inverter 5 are connected via the DC link capacitor 6. In the active decoupling circuit 2, the output capacitor Cs is connected between the neutral point 7N of the coils 7 and the DC negative electrode, but in the first comparative example charging device 10Y, the output capacitor Cs is connected between the neutral point 7N of the coils 7 and the DC negative electrode, and is connected between the positive electrode of the DC power supply 3 and the DC negative electrode (the same as the negative electrode of the DC power supply 3). That is, the capacitor voltage Vcs, which is the voltage across the output capacitor Cs, becomes the battery voltage Vbat, which is the voltage across the DC power supply 3.

In the first comparative example charging device 10Y, the main contactor 11 selectively connects the positive electrode of the inverter 5 (the inverter positive electrode terminals T5P) and the positive electrode of the output of the DC-DC converter 20 (the positive electrode terminal of the output capacitor Cs, and the neutral point 7N in a state where the OBC contactor 12 is closed) to the positive electrode of the DC power supply 3. That is, the main contactor 11 includes two contacts, a main contactor first contact 11a and a main contactor second contact 11b. When the inverter 5 functions as an in-vehicle charging device (first comparative example charging device 10Y), the main contactor second contact 11b is closed and the main contactor first contact 11a is opened. When the inverter 5 is used for drive control of the rotating electrical machine 70, the main contactor first contact 11a is closed, the main contactor second contact 11b is opened, and the inverter positive electrode terminal T5P of the inverter 5 is connected to the DC power supply 3 via the main contactor 11. When the vehicle is parked or when it is necessary to cut off the power supply to the rotating electrical machine 70 due to an abnormality or the like, both the main contactor first contact 11a and the main contactor second contact 11b can be in an opened state.

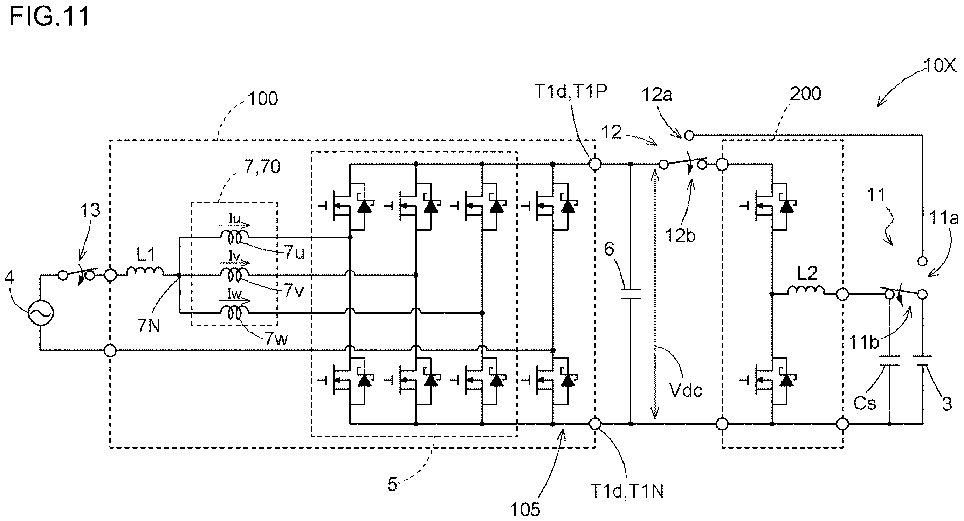

The circuit block diagram of Fig. 11 illustrates a second comparative example (second comparative example charging device 10X) of the in-vehicle charging device 10 using the drive control system of the rotating electrical machine 70. Similarly to the in-vehicle charging device 10 of the present embodiment and the first comparative example charging device 10Y, the second comparative example charging device 10X also charges the DC power supply 3 of the vehicle driving device 9 with power supplied from the external AC power supply 4. Similarly to the first comparative example charging device 10Y, the second comparative example charging device 10X also includes an AC-DC converter (comparative example AC-DC converter 100) and a DC-DC converter (comparative example DC-DC converter 200). However, in the first comparative example charging device 10Y, the drive system circuit of the rotating electrical machine 70 is shared by the DC-DC converter 20, but in the second comparative example charging device 10X, the drive system circuit of the rotating electrical machine 70 is shared by the AC-DC converter (comparative example AC-DC converter 100). The comparative example AC-DC converter 100 includes the inverter 5, the coils 7 of multiple phases, a single-phase arm 105 connected in parallel to the inverter 5, and the inductor L1 (first inductor). The coils 7 of multiple phases are short-circuited at the neutral point 7N, and the inductor L1 (first inductor) and the external AC power supply 4 are connected in series between the neutral point 7N and a midpoint of the single-phase arm 105. The three-phase arms constituting the inverter 5 are connected in parallel to constitute an apparent single arm, and form a full bridge circuit together with the single-phase arm 105.

In the second comparative example charging device 10X, the DC-DC converter (comparative example DC-DC converter 200) is formed independently without sharing the drive system circuit of the rotating electrical machine 70. The comparative example DC-DC converter 200 includes an arm in which switching elements are connected in series so as to be subjected to complementary switching control, and a second inductor L2 connected to a midpoint of the arm, and is configured as a step-down DC-DC converter. Note that the comparative example DC-DC converter 200 may be configured as a step-up converter or a step-up/step-down converter.

The second comparative example charging device 10X also includes the main contactor 11 and the grid contactor 13 similar to those of the first comparative example charging device 10Y of the in-vehicle charging device 10. The second comparative example charging device 10X also includes the OBC contactor 12 that selectively connects the comparative example AC-DC converter 100 (inverter 5) and the DC power supply 3, or connects the comparative example AC-DC converter 100 (inverter 5) and the comparative example DC-DC converter 200. The OBC contactor 12 includes two contacts, an OBC contactor first contact 12a and an OBC contactor second contact 12b. When the inverter 5 functions as an in-vehicle charging device (second comparative example charging device 10X), the OBC contactor second contact 12b is closed, and the OBC contactor first contact 12a is opened. When the inverter 5 is used for drive control of the rotating electrical machine 70, the OBC contactor first contact 12a is closed, the OBC contactor second contact 12b is opened, and the inverter positive electrode terminal T5P of the inverter 5 is connected to the DC power supply 3 via the OBC contactor 12 and the main contactor 11.

A rotating electrical machine serving as a driving power source of a vehicle is designed to have a high power density, and has a small inductance. Therefore, similarly to the second comparative example charging device 10X, when the external AC power supply 4 is connected to the neutral point 7N to form an AC-DC converter, a peak value of a harmonic current of a system current of the external AC power supply 4 tends to increase at the time of AC-DC conversion.

As one method for suppressing this, it is conceivable to increase the control frequencies of the inverter 5 and the comparative example DC-DC converter 200 included in the comparative example AC-DC converter 100. When these control frequencies are increased, the control cycle (control frequency) of the control device 8 also needs to be shortened. Switching at a high frequency increases a loss in switching elements included in the comparative example AC-DC converter 100 (inverter 5) and the comparative example DC-DC converter 200, leading to a decrease in efficiency of the second comparative example charging device 10X. In addition, it is necessary to use a microcomputer or the like capable of high-speed operation as the control device 8, which leads to an increase in cost of the second comparative example charging device 10X. In view of this point, in the second comparative example charging device 10X, in order to compensate for the inductance insufficient in the coils 7 while using the coils 7, the inductor L1 is disposed between the external AC power supply 4 and the neutral point 7N of the coils 7 of multiple phases to secure the necessary inductance. In the second comparative example charging device 10X, an inductor (second inductor L2) is also disposed in the comparative example DC-DC converter 200, and the number of inductors is increased as compared with the first comparative example charging device 10Y and the in-vehicle charging device 10 of the present embodiment, and the system cost tends to increase.

In view of this point, the first comparative example charging device 10Y is configured to suppress an increase in system cost. Specifically, among the AC-DC converter and the DC-DC converter constituting the charging device, the AC-DC converter 1 requiring an appropriate inductance is configured without using the drive system circuit of the rotating electrical machine 70 (the coils 7 of the rotating electrical machine 70 and the inverter 5 that drives the rotating electrical machine 70). That is, the first comparative example charging device 10Y can constitute the AC-DC converter 1 capable of performing AC-DC conversion while securing sufficient performance such as a power factor improving function by the AC-DC converter 1 in which an appropriate inductance is set using the inductor L1. In addition, the DC-DC converter 20 that does not require a high inductance is configured by sharing the drive system circuit of the rotating electrical machine 70, and the cost of the in-vehicle charging device (the first comparative example charging device 10Y) can be reduced. In addition, since an appropriate inductance is set in the AC-DC converter 1 by the inductor L1, it is not necessary to control the AC-DC converter 1 with a short control cycle (high control frequency).

However, in the active decoupling circuit 2 of the in-vehicle charging device 10 of the present embodiment, the DC side terminals T1d of the AC-DC converter 1 and the DC side terminals T5d of the inverter 5 are connected without interposing other passive components (for example, the DC link capacitor 6), whereas in the DC-DC converter 20 of the first comparative example charging device 10Y, the DC side terminals T1d of the AC-DC converter 1 and the DC side terminals T5d of the inverter 5 are connected via the DC link capacitor 6. In the first comparative example charging device 10Y, the AC component Prpl, which is a pulsation component of the first DC power, is reduced using the smoothing action of the DC link capacitor 6. Therefore, the DC link capacitor 6 is required to have a higher capability than that of acting as a smoothing capacitor in the drive system of the rotating electrical machine 70. As a result, it is necessary to increase the electrostatic capacitance of the DC link capacitor 6 as compared with a case where the DC link capacitor 6 is used only for the rotating electrical machine drive system. According to experiments and simulations by the inventors, it has been found that the DC link capacitor 6 of the first comparative example charging device 10Y requires about twice the capacity of the DC link capacitor 6 of the in-vehicle charging device 10 according to the present embodiment. Therefore, the in-vehicle charging device 10 of the present embodiment can easily realize miniaturization and reduction in system cost as compared with the first comparative example charging device 10Y.

In the first comparative example charging device 10Y, the main contactor 11 includes the two contacts. Since a large current flows through both the main contactor first contact 11a and the main contactor second contact 11b, the component size of the main contactor 11 tends to be relatively large. In the in-vehicle charging device 10 of the present embodiment, since one contact of the main contactor 11 is sufficient, an increase in the size of the main contactor 11 is also suppressed, an increase in the device scale of the in-vehicle charging device 10 is also suppressed, and the system cost is easily reduced.

As described above, in the in-vehicle charging device 10 of the present embodiment, power is converted between the DC power supply 3 and the rotating electrical machine 70 via the inverter 5 in a state where the main contactor 11 is closed and the OBC contactor 12 is opened, and power is converted between the external AC power supply 4 and the DC power supply 3 via the active decoupling circuit 2 including the AC-DC converter 1 and the inverter 5 in a state where both the main contactor 11 and the OBC contactor are closed.

In many cases, a contactor is disposed between the drive device for driving the rotating electrical machine 70 or the in-vehicle charging device 10 and the DC power supply 3 in order to cut off electrical connection when the DC power supply 3 is not used. Since a large current flows through the contactor, the contactor having a specification with a high current capacity and a high withstand voltage is used, and the size tends to increase. The in-vehicle charging device 10 of the present embodiment doubles as a drive device that drives the rotating electrical machine 70 and a part of a circuit, and also includes a contactor for switching the circuit. This contactor is often required to have a relatively high current capacity and a relatively high withstand voltage. With this configuration, since the drive device and the in-vehicle charging device 10 can be switched by the two contactors, that is, the first contactor (main contactor 11) and the second contactor (OBC contactor 12), the circuit scale can be easily reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1.  An in-vehicle charging device (10) that charges a direct-current (DC) power supply (3) of a vehicle driving device (9) with power supplied from an external alternating-current (AC) power supply (4), the vehicle driving device (9) including: a rotating electrical machine (70) including coils (7) of multiple phases connected to each other at a neutral point (7N), the rotating electrical machine (70) serving as a driving power source of a wheel; an inverter (5) that converts power between a direct current and an alternating current of multiple phases; and the DC power supply (3) connected to the inverter (5),
    the in-vehicle charging device (10) comprising:

an AC-DC converter (1) that converts power between AC power on an external AC power supply (4) side and first DC power; and

an active decoupling circuit (2) that includes the inverter (5), the coils (7) of multiple phases, and an output capacitor (Cs), and generates second DC power for charging the DC power supply (3) from the first DC power, wherein

a DC side terminal (T1d) of the AC-DC converter (1) and a DC side terminal (T5d) of the inverter (5) are connected to each other without another passive component, and

the output capacitor (Cs) is connected between the neutral point (7N) of the coils (7) and a DC negative electrode.

2. The in-vehicle charging device (10) according to Claim 1, further comprising:

a first contactor (11) that disconnects electrical connection between the DC power supply (3) and the DC side terminal (T5d) of the inverter (5); and

a second contactor (12) that disconnects electrical connection between the neutral point (7N) and the output capacitor (Cs), wherein

power is converted between the DC power supply (3) and the rotating electrical machine (70) via the inverter (5) in a state where the first contactor (11) is closed and the second contactor (12) is opened, and

power is converted between the external AC power supply (4) and the DC power supply (3) via the active decoupling circuit (2) including the AC-DC converter (1) and the inverter (5) in a state where both the first contactor (11) and the second contactor (12) are closed.

3. The in-vehicle charging device (10) according to Claim 1 or 2, wherein

the inverter (5) includes a plurality of arms in parallel according to a number of alternating currents of multiple phases, each arm including an upper-stage side switching element (5U) and a lower-stage side switching element (5L) connected in series between a DC positive electrode and the negative electrode, and

when the inverter (5) functions as the active decoupling circuit (2), a plurality of the upper-stage side switching elements (5U) are simultaneously subjected to switching control, and a plurality of the lower-stage side switching elements (5L) are simultaneously subjected to switching control.

4. The in-vehicle charging device (10) according to Claim 3, wherein in the inverter (5), the plurality of upper-stage side switching elements (5U) and the plurality of lower-stage side switching elements (5L) are subjected to switching control such that a phase of a current flowing through the output capacitor (Cs) coincides with a phase of an alternating current in the AC-DC converter (1).

# FIG.1

## FIG.2

EP 4 488 104 A1

FIG.3

EP 4 488 104 A1

## FIG.4

## FIG.5

FIG.6

FIG.7

FIG.8

# FIG.9

FIG.10

EP 4 488 104 A1

FIG.11

Europäisches
Patentamt

European
Patent Office

Office européen
des brevets

# EUROPEAN SEARCH REPORT

**Application Number**

EP 24 18 4294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 116 249 B2 (FORD GLOBAL TECH LLC [US]) 30 October 2018 (2018-10-30) * abstract; figures 4-6, 9 * | 1-4 | INV. B60L50/51 B60L53/24 H02M1/14 |
| A | US 11 245 346 B2 (HYUNDAI MOTOR CO LTD [KR]; KIA MOTORS CORP [KR]) 8 February 2022 (2022-02-08) * abstract; figure 1 * | 1-4 | |
| A | US 11 552 557 B2 (LEAR CORP [US]) 10 January 2023 (2023-01-10) * abstract; figure 3 * | 1-4 | |
| A | CN 116 252 648 A (WEILAI POWER TECH HEFEI CO LTD) 13 June 2023 (2023-06-13) * abstract; figure 1 * | 1-4 | |

**TECHNICAL FIELDS SEARCHED (IPC)**

B60L
H02M

The present search report has been drawn up for all claims

| Place of search | Date of completion of the search | Examiner |
|---|---|---|
| The Hague | 22 November 2024 | Arias Pérez, Jagoba |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4294

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | | Publication date | Patent family member(s) | | Publication date |
|---|---|---|---|---|---|
| US 10116249 | B2 | 30-10-2018 | CN | 108462189 A | 28-08-2018 |
| | | | DE | 102018103345 A1 | 23-08-2018 |
| | | | US | 2018241337 A1 | 23-08-2018 |
| US 11245346 | B2 | 08-02-2022 | CN | 111791728 A | 20-10-2020 |
| | | | KR | 20200116580 A | 13-10-2020 |
| | | | US | 2020313581 A1 | 01-10-2020 |
| US 11552557 | B2 | 10-01-2023 | CN | 114069807 A | 18-02-2022 |
| | | | DE | 102021119431 A1 | 03-02-2022 |
| | | | US | 2022038019 A1 | 03-02-2022 |
| CN 116252648 | A | 13-06-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022503713 A